# EUROPEAN PATENT APPLICATION

(11) **EP 3 939 951 A1**
(43) Date of publication of application: **19.01.2022**
(21) Application number: 20020461.8
(22) Date of filing: 06.10.2020
(51) Int. Cl.: C05F 17/914, B01F 13/00, C05F 17/943

(54) **INSTALLATION FOR BIOCOMPOST LOOSENING**

(30) Priority: 14.07.2020 RO 202000402
(71) Applicant: Institutul National de Cercetare Dezvoltare pentru Masini si Instalatii destinate Agriculturii si Industriei Alimentare-INMA, Bucuresti (RO)
(72) Inventor: Paun, Anisoara, Bucuresti (RO); Ganea-Christu, Ioan, Bucuresti (RO); Matache, Mihai, Judetul Prahova (RO); Caba, Ioan Ladislau, 300076 Judetul Timis (RO); Laza, Evelin-Anda, Judetul Timis (RO)
(74) Representative: Strenc, Alexandru Cristian

(57) **Abstract**

The invention relates to a mobile installation with electromechanical actuation intended for aerating and mixing biocompost in agricultural units for its capitalization as fertilizer for vegetable growing and other agricultural sectors.

The Installation for biocompost loosening, according to the invention, consists of the central support (**1**) on which is mounted by means of two special bearings (**18**) and (**19**) a central drum (**17**) with removable and orientable turns and knives which is driven by a conical-cylindrical gear motor (**21**) by means of a Gall type double-chain transmission.

For travel, this equipment is provided with two mechanical systems with rubber tracks (**13**) and (**14**) that are driven by a double-worm gear motor (**5**) and (**6**) and a speed reducer-amplifier (**75**). This system contains a cylindrical shaft (**76**) that passes through the tubular shafts of the double-worm gear motors (**5**) and (**6**) and which has electromagnetic couplings (**78**) and (**82**) mounted at the two ends, which can drive a pinion (**79**) or a gear (**83**) of Gall chain transmissions thus obtaining a different speed of shaft (**80**) at 1/2 or 2/1 ratio depending on the electrical control applied to one of the two electromagnetic couplings (**78**) and (**82**).

To correlate the control of the two frequency converters that drive the rubber tracks for travel, the control block is composed of a system for adjusting the travel direction with two electric potentiometers (**90**) and (**91**) that control the two frequency converters to electronically adjust the speed of the two double-worm gear motors that actuate the gears driving the rubber tracks. On the shafts of the two potentiometers (**90**) and (**91**) are mounted two gears with fine teeth (**97**) and (**98**) and the gear (**98**) is provided with a rod (**99**) and a knob (**100**) for rotation. The rotation of the two potentiometers will be a simultaneous rotation but in the opposite direction in order to increase or decrease the supply frequencies of the two converters with precise values, thus ensuring the correct movement in the direction established during work or adjusting the speed of the double-worm gear motors when cornering.

## Description

The invention relates to a mobile installation with electromechanical actuation intended for aerating and mixing biocompost in agricultural units for its capitalization as fertilizer for vegetable growing and other agricultural sectors.

In the present state of the art, it is known the patent US2011100179841A1, which refers to a process and equipment of high speed composting through processes that include sieving, mechanical pretreatment, physico-chemical pretreatment, stabilization process with high refining rate of products and addition of seven types of chemical agents including wetting agents, disinfecting agents, organic stabilizing agents, etc.

Patent KR 0050018561 is also known, which relates to an equipment for cutting and mixing compost and reducing the fermentation time by adding chemical agents.

Patent CA 2797506 is also known, which comprises equipment provided with a drum having the blades rigidly mounted in a helical direction.

Patent CN 103964912 A is also known, which comprises a servomotor driven by an electric motor and which performs both the rotation of the drum and the lifting of the rotating shaft, as well as a displacement device.

Patent US 6125622A is also known on the compost mixing equipment which is provided with a frame on which a knife auger is mounted and which can rotate around an axis for transporting the compost.

It is also known the equipment with electromechanical drive for biocompost loosening SCF 201 EL produced by GUJER INNOTEC AG in the case of which the drum has removable knives but fixedly positioned at an angle to the axis of rotation on supports welded in the helical direction on the surface of the central drum. Although the displacement system is simple from the constructive point of view, it is made of two chain conveyor systems with stiffening plates and attachments on which are mounted some rectangular plates made of textolite or high density polyamide which will cause the equipment to slip during work if the height of the compost layer is at least 1.5 m, a height that is minimally necessary for the optimal production of the compost layer.

The disadvantages of the known solutions consist in the following:
- low degree of aeration and homogenization;
- complex construction that requires in some cases a tractor for towing and driving the knife drum;
- difficult disassembly of the central knife drum;
- the knives on the central drum do not have an adjustable angular position.

The technical problem solved by the invention consists in the realization of an autonomous installation with electromechanical drive that will contain all the necessary elements for biocompost aeration and mixing equipment with the possibility of angular adjustment of the knives on the central drum and its quick disassembly, the central drum also having two spiral-shaped galvanized sheet elements that will transport the biocompost to the central part of the working area.

The installation, according to the invention, consists of a support on which is mounted by means of two special bearings a drum with removable and orientable turns and knives which is driven by a conical-cylindrical gear motor by means of a Gall type double-chain transmission. For travel, the equipment is provided with two mechanical systems with rubber tracks that are driven by a double-worm gear motor and a speed reducer-amplifier. The equipment is fitted with a water tank and a spraying system operated by a liquid pump. The electrical control panel can perform forward or reverse travel controls, left or right rotations, slow and adjustable speed for traveling to perfom the technological phase of aerating and mixing the compost and an increased speed of maximum 8/1 to achieve the idling state.

The installation for biocompost loosening, according to the invention, has the following advantages:
- the main advantage is the increase of the degree of loosening by the fact that the knife drum has mounted on the central side three knives of a special shape that will throw the material and on the sides it has a set of curbed knives mounted on a helical spiral and wheels at a certain angle;
- has an autonomous operating system;
- achieves different travel speeds for the technological working phase and the travel and returns phase;
- allows easy disassembly of the knife drum;
- allows the rotation of removable knives at the desired angle;
- easy transport of the biocompost from the outside of the deposit to the central part due to the fact that it is provided with a knife drum which has a left and right direction spiral mounted on both ends.

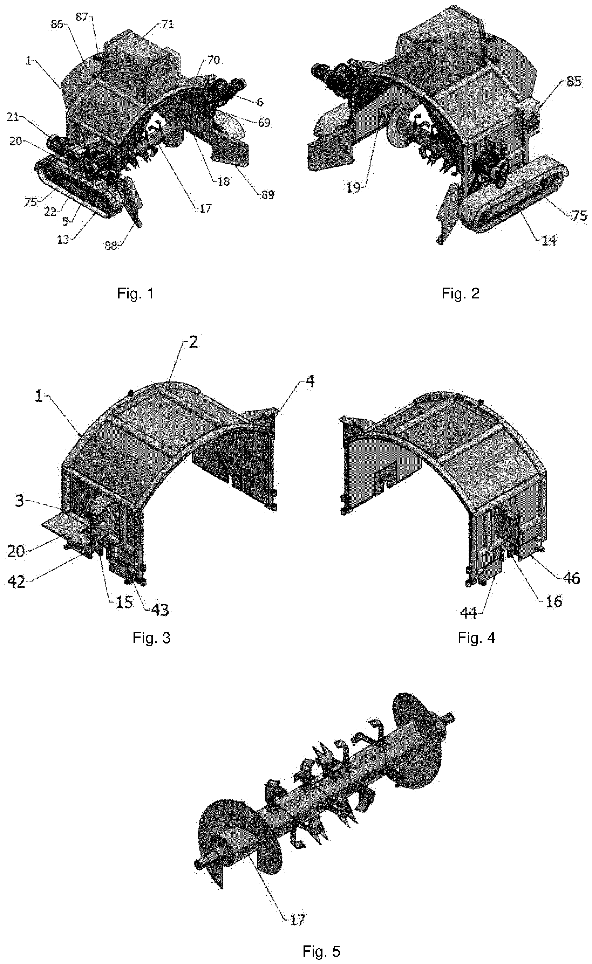

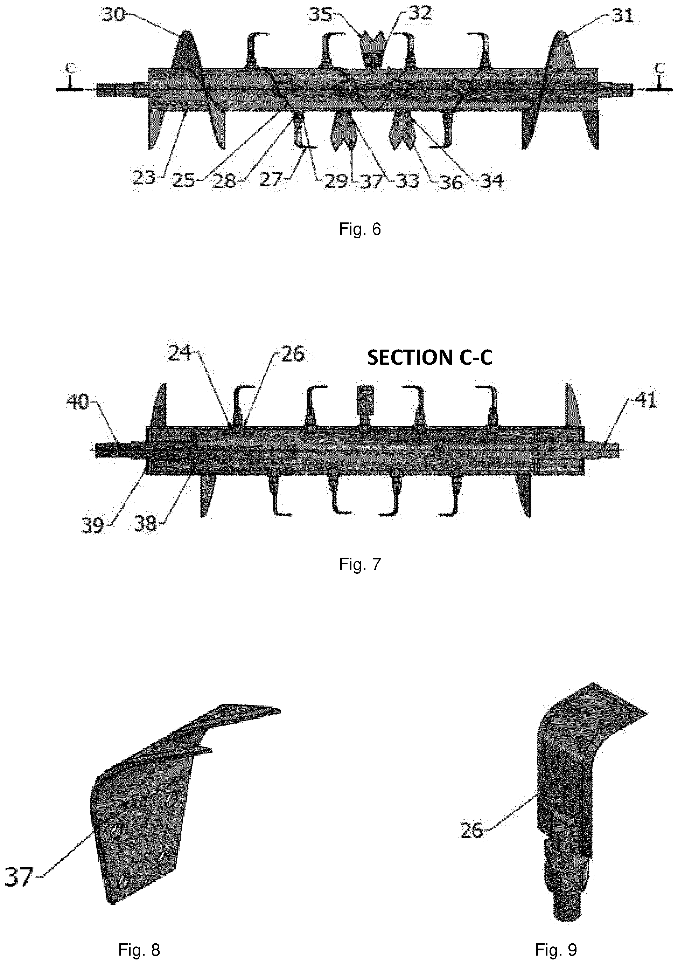

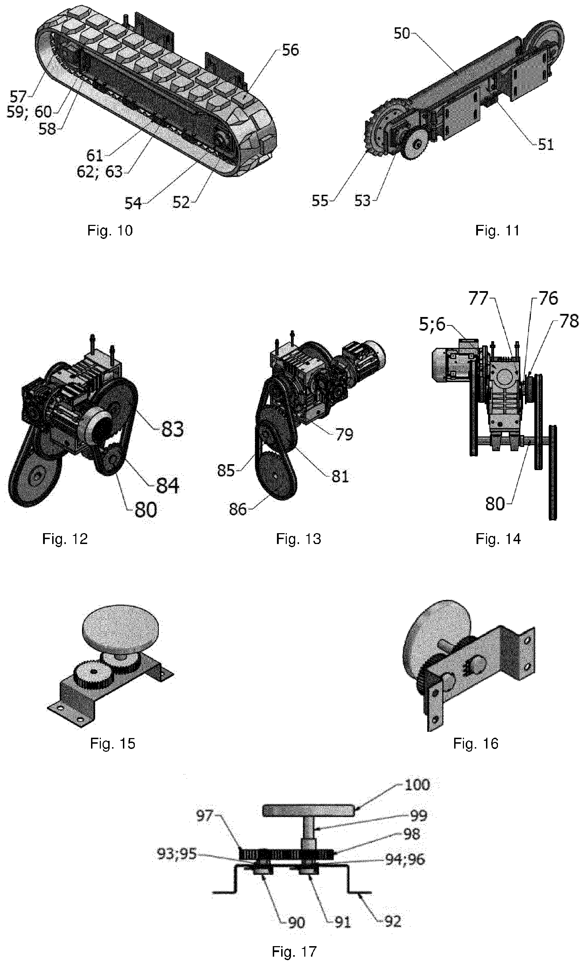

An embodiment of the invention is shown in connection with Fig. 1-17 which represent:
- Fig. 1 - Installation for biocompost loosening - main view;
- Fig. 2- Installation for biocompost loosening - rear view;
- Fig. 3- Installation for biocompost loosening - main view of the support;
- Fig. 4- Installation for biocompost loosening - lateral view of the support;
- Fig. 5- Installation for biocompost loosening - general view of the central drum;
- Fig. 6- Installation for biocompost loosening - front view of the central drum;
- Fig. 7- Installation for biocompost loosening - central drum cross section;
- Fig. 8- Installation for biocompost loosening - lateral view of the toothed knife;
- Fig. 9- Installation for biocompost loosening - lateral view of the orientable curved knife;
- Fig.10- Installation for biocompost loosening - lateral view of the rubber track travel module;
- Fig.11- Installation for biocompost loosening - view from the attachment side of the rubber track travel module;
- Fig.12- Installation for biocompost loosening - lateral view of speed reducer-amplifier system;
- Fig.13- Installation for biocompost loosening - rear view of speed reducer-amplifier system;
- Fig.14- Installation for biocompost loosening - front view of speed reducer-amplifier system;
- Fig. 15- Installation for biocompost loosening - lateral view of the rotation correlation system of the two potentiometers in the control module;
- Fig. 16- Installation for biocompost loosening - bottom view of the rotation correlation system of the two potentiometers in the control module;
- Fig.17- Installation for biocompost loosening - front view of the rotation correlation system of the two potentiometers in the control module.

The installation for biocompost loosening, according to the invention, consists of the central support **(1)** made of galvanized pipe of rectangular cross-section **(2)** on which are mounted two plates **(3)** and **(4)** for double-worm gear motors **(5)** and **(6)** which by means of two chain transmissions **(7)** and **(8)** will drive the chain pulleys **(9)** and **(10)** mounted on the axles **(11)** and **(12)** of two rubber track traveling subassemblies **(13)** and **(14).** On the central support (1) are mounted two plates with mounting holes and open channels **(15)** and **(16)** in which the central knife drum **(17)** is mounted by means of two bearings **(18)** and **(19).** Also on the central support **(1)** a special support **(20)** is mounted for a conical-cylindrical gear motor **(21)** which, by means of a Gall chain transmission **(22),** will drive the central knife drum **(17).**

The central drum **(17)** is constructed of a thick wall pipe **(23)** in which holes **(24)** are made which are positioned on a helical spiral **(25)** and in which bushings **(26)** with threaded holes are welded in which will be mounted knives **(27)** with the tip bent and sharpened on all active edges by means of hexagon nuts **(28)** and Grower washers **(29).** On the ends of the central drum **(17)** are mounted by welding two left-handed and right-hended helical spirals **(30)** and **(31).** On the central side of the drum **(17)** are welded supports **(32), (33)** and **(34)** on which are mounted some specially toothed and curved knives **(35), (36)** and **(37)** which are mounted positioned diametrically opposite and the two knives **(36)** and **(37)** at a certain distance to uniformly take over the biocompost. On the ends of the central drum **(17)** are mounted the flanges **(38)** and **(39)** and the spindles **(40)** and **(41)** which will be used for mounting in the bearings **(18)** and **(19).**

On the central support **(1)** are mounted some channel clamping plates for the supports **(42), (43), (44)** and **(45)** of the rubber track traveling subassemblies **(13)** and **(14).** To adjust the working height of the central drum **(17)** relative to the ground level, some screws **(46), (47), (48)** and **(49)** are used that will raise the central support **(1)** relative to the horizontal level of the rubber tracks **(13)** and **(14).**

The rubber track traveling subassemblies **(13)** and **(14)** consist of reinforced metal plates **(50)** and **(51)** on which are mounted the bearings **(52)** and **(53)** and a shaft **(54)** on which the gear **(55)** is positioned, which will drive the rubber track **(56)** and which is stretched by means of the tension roller **(57),** screws **(58)** and nuts and Grower washers **(59)** and **(60).** At the bottom of the reinforced metal plates **(50)** and **(51),** holes are made for support rollers **(61)** to be fixed using screws and Grower washers **(62)** and **(63).** At the rear of the central support **(1)** is mounted a compost guide module consisting of a curved blade **(64)** mounted with two cylindrical joints **(65)** and **(66)** and positioned at an angle with the help of a tensioner **(67)** locked in the working position by nuts **(68).** At the front of the equipment is mounted a rubber stripe shield **(69)** and a water spray nozzle pipe **(70)** which is connected to the tank **(71)** mounted on top of the equipment on the support **(72).**

In the front and on the lateral elements of the central support **(1)** paddles **(73)** and **(74)** for guiding the compost were mounted.

The installation for biocompost loosening has a speed reducer-amplifier **(75)** for achieving the technological speed of 1 m.l./min and the idling speed of 8 m/min. This module **(75)** contains a cylindrical shaft **(76)** with channel that passes through the tubular shaft **(77)** of the double-worm gear motors **(5)** and **(6)** and which are driven by it. On one end of each cylindrical shaft **(76)** is mounted an electromagnetic coupling **(78)** which can engage in a rotation motion a pinion **(79)** for Gall chain transmission if this electromagnetic coupling **(78)** receives voltage supply. In this case, a 1/2 ratio transmission can be made to a shaft **(80)** on which a double toothed gear **(81)** is mounted relative to the pinion **(79)** on the shaft **(76).**

On the other side of the cylindrical shaft **(76)** is mounted another electromagnetic coupling **(82)** which can engage a gear **(83)** for Gall chain transmission and achieves a speed increase of 2/1 on the shaft **(84).**

This system, corroborated with the use of two electric motors with two speeds (3000 rpm and 1500 rpm) which are mounted on the two double-worm gear motors **(5)** and **(6)** ensures the achievement of technological working and travel speeds with 1/8 ratio and by using two frequency converters for each double-worm gear motor that are mounted in the electrical panel **(85)** will allow the technological working speed to be reduced to 0.6 m/min which will cause a fine shredding of biocompost but also the use of a conical-cylindrical gear motor with low electricity consumption to drive the central knife drum.

Moving the equipment in the opposite direction to the work one, required for turning, can be done by electric switch 0-1-2 which changes the polarity of the two-phase power supply of the electric motors of the two double-worm gear motors **(5)** and **(6).**

For guiding the biocompost during work, the installation is provided with a guide hole **(86)** which is adjusted angularly with a tensioner **(87).** For guiding the biocompost inward, the loosening installation is provided with two paddles **(88)** and **(89)** adjustable in terms of positioning angle.

For the precise adjustment of the travel direction but also for the adjustment of the cornering, it is necessary to correlate the rotation of two potentiometers **(90)** and **(91)** that will adjust the frequency converters that control the double-worm gear motors for driving the rubber track travel subassemblies of the loosening installation. The two angular potentiometers **(90)** and **(91)** are rigidly fixed at a certain distance from each other on a plate **(92)** by means of two hexagon nuts **(93)** and **(94)** and two Grower washers **(95)** and **(96).**

On the shafts of the two potentiometers **(90)** and **(91)** are mounted 2 gears with fine teeth **(97)** and **(98)** and the gear **(98)** is provided with a rod **(99)** and a knob **(100)** for rotation.

The rotation of the 2 potentiometers will be simultaneous but in the opposite direction to increase or decrease the supply frequencies of the two converters with precise values.

For precise movement in the forward direction, after the exact adjustment of the two angular potentiometers **(90)** and **(91),** the rod **(99)** can be locked with a lock that is not shown in the drawing.

This forward direction adjustment module can be attached to a classic steering wheel fixed with bearing housings on a support the loosening installation can be fitted with.

## Claims

1. Installation for biocompost loosening consists of a support on which is mounted by means of two special bearings a drum with removable and orientable turns and knives which is driven by a conical-cylindrical gear motor by means of a Gall type double-chain transmission, for travel, the equipment being provided with two mechanical systems with rubber tracks that are driven by a double-worm gear motor and a speed reducer-amplifier, the installation being fitted with a water tank and a spraying system operated by a liquid pump and an electrical control panel for forward or reverse travel, left or right rotations, slow and adjustable speed for traveling to perfom the technological phase of loosening the biocompost and an increased speed of maximum 8/1 to achieve the idling state, **characterized by the fact that,** it consists of support **(1)** with plates **(3)** and **(4)** with elongate channels that allow fast assembly and disassembly of the central drum **(17)** only by loosening and tightening the screws for mounting the bearings **(18)** and **(19)** and then raising the support **(1)** and taking out the central drum **(17),** a speed reducer-amplifier **(75)** for achieving the technological and travel speed, a system for adjusting the direction of travel (SRDD) respectively.

2. Installation for biocompost loosening, according to claim 1, **characterized by the fact that,** the central drum **(17)** is provided with two helical spirals **(30)** and **(31)** which move the biocompost from the edge of the deposit to the central part and a set of knives **(27)** with the tip bent and sharpened on all active edges which can be mounted and positioned at different angles in threaded bushings **(26)** that are welded on the part **(23)** of the the central drum **(17),** knives **(27)** locking being made by using hexagon nuts **(28)** and Grower washers **(29),** while for increasing the loosening degree, on the central drum is mounted a set of toothed and curved knives **(35), (36)** and **(37).**

3. Installation for biocompost loosening, according to claim 1, **characterized by the fact that,** the two speed reducers-amplifiers **(75)** can achieve both a very low technological speed of 1 m/min and a much higher travel speed of 8 m/min to increase labor productivity, this system containing a cylindrical shaft **(76)** that passes through the tubular shafts of the double-worm gear motors **(5)** and **(6)** and it has electromagnetic couplings **(78)** and **(82)** mounted at the two ends, which drive the pinion **(79)** or the gear **(83)** of Gall chain transmissions obtaining a different speed of shaft **(80)** at 1/2 or 2/1 ratio depending on the electrical control applied to one of the two electromagnetic couplings **(78)** and **(82).**

4. Installation for biocompost loosening, according to claim 1, **characterized by the fact that,** the system for adjusting the direction of travel (SRDD) consists of two electric potentiometers **(90)** and **(91)** that control the two frequency converters of the electrical panel **(85)** to electronically adjust the speed of the two double-worm gear motors **(5)** and **(6)** which actuate the gears driving the rubber tracks **(13)** and **(14),** on the shafts of the two potentiometers **(90)** and **(91)** being mounted two gears with fine teeth **(97)** and **(98)** and the gear **(98)** being provided with a rod **(99)** and a knob **(100)** for simultaneous rotation but in the opposite direction in order to increase or decrease the supply frequencies of the two converters with precise values.
